# EUROPÄISCHE PATENTSCHRIFT

(11) **EP 1 493 002 B1**
(45) Veröffentlichungstag und Bekanntmachung des Hinweises auf die Patenterteilung: **08.06.2011**
(21) Anmeldenummer: 03717286.3
(22) Anmeldetag: 09.04.2003
(51) Int. Cl.: G01F 23/24

(54) **VORRICHTUNG ZUR ERKENNUNG EINES VORGEGEBENEN FÜLLSTANDS EINES MEDIUMS IN EINEM BEHÄLTER**
DEVICE FOR DETECTING A DEFINED FILLING LEVEL OF A MEDIUM IN A CONTAINER
DISPOSITIF DE DETECTION D'UN NIVEAU DE REMPLISSAGE PREDEFINI D'UNE SUBSTANCE DANS UN CONTENANT

(30) Priorität: 10.04.2002 DE 10215818
(43) Veröffentlichungstag der Anmeldung: 05.01.2005
(73) Patentinhaber: ENDRESS + HAUSER WETZER GmbH + Co. KG, 87484 Nesselwang (DE)
(72) Erfinder: BELLER, Johann, 87672 Rosshaupten (DE)
(74) Vertreter: Redding, Anke
(86) Internationale Anmeldenummer: PCT/EP2003/003683
(87) Internationale Veröffentlichungsnummer: WO 2003/085364

(56) Entgegenhaltungen:
- DD-A- 249 965
- DE-A- 2 643 522
- GB-A- 2 117 910
- US-A- 4 056 978
- US-A- 5 254 311

## Beschreibung

Die Erfindung bezieht sich auf eine Vorrichtung zur Erkennung eines vorgegebenen Füllstands eines Mediums in einem Behälter mit Deckel mittels einer konduktiven Meßeinrichung, die zumindest zwei in den Behälter hineinragende Meßelektroden aufweist, wobei ein zwischen den beiden Meßelektroden fließender Meßstrom zur Erkennung des Erreichens des vorgegebenen Füllstands herangezogen wird. Eine derartige Vorrichtung ist aus DD-A-249 965 bekannt.

Bevorzugt handelt es sich bei dem Behälter um den Dosierbehälter einer Dosiereinrichtung, die in einem Probennehmer angeordnet ist. Es versteht sich von selbst, daß die erfindungsgemäße Lösung keineswegs auf diese spezielle Anwendung beschränkt ist.

Vorrichtungen der zuvor genannten Art werden beispielsweise in automatischen Probennehmern eingesetzt. Probennehmer, die zur hochpräzisen Entnahme von Flüssigkeitsproben geeignet sind, werden von der Anmelderin u.a. unter der Bezeichnung 'ASP-Station 2000' angeboten und vertrieben. In der ASP-Station 2000 werden zeit-, mengen- und durchflußproportional Proben nach dem Vakuumprinzip entnommen. Zur hochpräzisen Proben-abfüllung dient hier - wie bereits gesagt - eine Dosiereinrichtung, die u.a. einen Dosierbehälter mit Deckel aufweist.

In der ASP-Station 2000 erfolgt die Probennahme in vier Schritten: Zu Beginn einer Probennahme wird die Dosiereinrichtung pneumatisch abgesperrt. Eine Pumpe, hier eine Membranpumpe, bläst über den Dosierbehälter die Ansaugleitung für die Probe frei. In einem zweiten Schritt wird die Probe angesaugt, bis die beiden langen Leitfähigkeitssonden, die am Deckel des Dosierbehälters festgemacht sind, ansprechen. Anschließend wird das eingestellte Probenvolumen dosiert und die überschüssige Probenmenge fließt zum Entnahmeort zurück. In einem letzten Schritt wird die Schlauch-quetschung geöffnet, und die Probe wird in die entsprechende Probenflasche abgelassen. Die Probenflaschen werden zwecks Probenkonservierung in der ASP-Station 2000 gekühlt aufbewahrt.

Im Falle der ASP-Station 2000 sind am Deckel des Dosierbehälters drei Leitfähigkeitssonden unterschiedlicher Länge befestigt. Die beiden längeren Leitfähigkeitssonden kommen am Ende der Ansaugphase mit dem Probenmedium in Kontakt. Über einen zwischen den Leitfähigkeitssonden fließenden Strom wird der gewünschte Befüllungsgrad des Dosierbehälters erkannt. Der Ansaugvorgang wird beendet, sobald zwischen den beiden Leitfähigkeitssonden ein Strom fließt.

Lagert sich im Bereich des Behälterdeckels leitfähiges Substrat ab - tritt also eine unerwünschte Verschmutzung im Bereich des Behälterdeckels auf - so fließt zum einen ein Störstrom zwischen einer der Meßelektroden und der kurzen Elektrode zum anderen aber auch zwischen den beiden langen Meßelektroden. Folge in beiden Fällen ist eine sofortige Sicherheits-abschaltung der Dosiereinrichtung: Eine entsprechende Meldung (Fehler: Leitfähigkeit 2 bzw. Fehler: Leitfähigkeit 1) wird an das Bedienpersonal ausgegeben.

Problematisch bei der bekannten Lösung ist, daß insbesondere bei Probenmedien mit hoher Leitfähigkeit die leitfähige Verschmutzungen am Behälterdeckel und folglich zwischen den Elektroden bereits nach einer relativ kurzen Betriebszeit der Dosiereinrichtung auftreten. Der Widerstand der leitfähigen Verschmutzungen ist nun üblicherweise um ein Vielfaches geringer als der Widerstand des Probenmediums selbst. Sobald bei der bekannten Lösung daher leitfähige Verschmutzungen im Bereich des Deckels des Behälters auftreten, ist die Funktion der konduktiven Meßeinrichtung als konduktiver Schalter nicht mehr gewährleistet. Konsequenterweise wird die Dosierein richtung umgehend abgeschaltet und kann erst wieder in Betrieb genommen werden, wenn die Ablagerungen am Deckel des Behälters entfernt worden sind. Da die Reinigungsarbeiten mitunter in sehr kurzen Zyklen durchgeführt werden müssen, läßt sich der bekannte Probennehmer je nach Probenmedium nur mit einem relativ hohen Wartungsaufwand betreiben. Ein hoher Wartungsaufwand ist aus verständlichen Gründen unerwünscht.

Als Fazit bleibt festzustellen: Die aus dem Stand der Technik bekannt gewordene Lösung ist nicht in der Lage, den vorgegebenen Füllstand eines Mediums in einem Behälter zu erkennen, sobald sich am Deckel des Behälters leitfähige Ablagerungen ausgebildet haben. Die Dosiereinrichtung wird daher abgeschaltet, obwohl dies in einer Vielzahl von Fällen nicht nötig wäre, da die Verschmutzung den tolerierbaren Grenzwert noch nicht erreicht haben.

Zwar ist am Deckel des Dosierbehälters der ASP-Station noch eine kurze Sicherheitselektrode angeordnet. Diese Sicherheitselektrode dient jedoch ausschließlich einer Sicherheitsabschaltung. Erfolgt durch die beiden langen Meßelektroden keine Abschaltung (z. B. hervorgerufen durch einen Elektronikfehler oder durch die Tatsache, daß die Meßelektroden durch nicht leitende Stoffe, z. B. Fett verschmutzt sind), dann taucht bei Erreichen eines zweiten vorgegebenen Füllstands die kurze Sicherheitselektrode in das Proben-medium ein; umgehend erfolgt eine Sicherheitsabschaltung mit Meldung. Durch diese Sicherheitsabschaltung wird ein Eindringen vom Probenmedium in die Pneumatiksteuerung und die Vakuumpumpe effektiv verhindert.

Der Erfindung liegt die Aufgabe zugrunde, eine Vorrichtung vorzuschlagen, mit der das Erreichen eines vorgegebenen Füllstands in einem Behälter, insbesondere in einem Dosierbehälter eines Probennehmers, selbst bei leitfähigen Verschmutzungen im Bereich des Behälterdeckels mit hoher Sicherheit festgestellt wird.

Die Aufgabe wird gemäß einer ersten Variante der Erfindung dadurch gelöst, daß eine Kompensationselektrode vorgesehen ist, die so angeordnet und geschaltet ist, daß ein zwischen einer der Meßelektroden und der Kompensationselektrode fließender Störstrom, der aufgrund von leitfähigen Ablagerungen im Deckel des Behälters ermöglicht wird, über die Kompensationselektrode auf Masse abgeleitet wird. Erfindungsgemäß wird der Störstrom somit weitgehend aus dem eigentlichen Meßzweig, der der Ermittlung des Erreichens des vorgegebenen Füllstands dient, ausgekoppelt. Hierdurch wird es möglich, die Überwachung des Füllstands selbst dann noch zuverlässig durchzuführen, wenn sich im Bereich des Behälterdeckels bereits leitfähige Ablagerungen einer nicht unbeachtlichen Schichtdicke ausgebildet haben.

Die Aufgabe wird gemäß einer zweiten Variante der Erfindung dadurch gelöst, daß eine Kompensationselektrode vorgesehen ist, die so angeordnet und geschaltet ist, daß anhand eines zwischen einer der Meßelektroden und der Kompensationselektrode fließenden Störstroms, der aufgrund von leitfähigen Ablagerungen im Deckel des Behälters ermöglicht wird, der Verschmutzungs-grad im Bereich des Deckels des Behälters ermittelt wird.

Diese erfindungsgemäße Lösung beschränkt sich also nicht darauf, eine Aussage dahingehend zu treffen, daß eine leitfähige Verschmutzung vorliegt, sondern sie ermöglicht es auch, den Verschmutzungsgrad anzugeben. Im konkreten Falle einer Dosiereinrichtung eines Probennehmers bedeutet dies das folgende: Eine Meldung an das Personal, daß eine Reinigung des Behälterdeckels erforderlich ist, oder daß eine geeignete andere Maßnahme ergriffen werden muß, wird erst dann in die Wege geleitet, wenn ein vorgegebener tolerierbarer Grenzwert für den Verschmutzungsgrad überschritten wird. Durch die erfindungsgemäße Lösung lassen sich die Wartungsarbeiten an dem Probennehmer erheblich reduzieren. Sehr wichtig ist die Erfindung auch im Hinblick auf Maßnahmen, die im Zusammenhang mit 'Predictive Maintenance' stehen.

Gemäß einer vorteilhaften Weiterbildung der erfindungsgemäßen Vorrichtung sind die beiden Meßelektroden am Deckel des Behälters befestigt. Bevorzugt sind die beiden Meßelektroden zylinderförmig oder säulenförmig ausgebildet.

Eine bevorzugte Ausgestaltung der erfindungsgemäßen Vorrichtung sieht vor, daß die Kompensationselektrode zur Ermittellung des Verschmutzungsgrades im Bereich des Deckels des Behälters derart ausgebildet und angeordnet ist, daß sie bei Erreichen des vorgegebenen Füllstands nicht mit dem Medium in Kontakt kommt.

Weiterhin ist vorgesehen, daß die Kompensationselektrode plattenförmig ausgebildet und in unmittelbarer Nähe zum Deckel des Behälters angeordnet ist. Zusätzlich kann die Kompensationselektrode symmetrisch zwischen den beiden Meßelektroden angeordnet ist. Es versteht sich von selbst, daß jede andere Art der Anordnung der Elektroden, solange sie nur den Grundgedanken der erfindungsgemäßen Vorrichtung realisiert, gleichfalls möglich ist. So ist es möglich, die Kompensationselektrode ringförmig - geschlossenen oder offen - um eine der Meßelektroden herum anzuordnen.

Eine günstige Ausführungsform der erfindungsgemäßen Vorrichtung schlägt eine erste Strommeßvorrichtung vor, die anhand eines zwischen den beiden Meßelektroden fließenden Meßstroms Information über das Erreichen des vorgegebenen Füllstands zur Verfügung stellt. Bevorzugt ist der ersten Strommeßvorrichtung eine erste Auswerteeinheit zugeordnet, die anhand des jeweiligen Wertes des Meßstroms der ersten Strommeßvorrichtung erkennt und ggf. signaliseirt, wenn der vorgegebene Füllstand erreicht ist. Diese Information wird im Falle, daß es sich um eine Dosiervorrichtung handelt, an die Prozeßablaufsteuerung für den Dosiervorgang weitergeleitet. Bei der Auswerteeinheit handelt es sich im einfachsten Fall um zumindest einen Komparator.

Gemäß einer bevorzugten Weiterbildung der erfindungsgemäßen Vorrichtung ist eine zweite Strommeßvorrichtung vorgesehen, die anhand eines zwischen einer der beiden Meßelektroden und der Kompensationselektrode fließenden Stroms Information über den Verschmutzungsgrad an dem Deckel des Behälters zur Verfügung stellt. Weiterhin ist der zweiten Strommeßvorrichtung eine zweite Auswerteeinheit zugeordnet, die anhand des Ausgangssignals der zweiten Strommeßvorrichtung erkennt und ggf. signalisiert, daß ein vorge-gebenen Verschmutzungsgrad erreicht ist bzw. welcher Verschmutzungsgrad erreicht ist. Wiederum kann es sich bei der Auswerteeinheit um zumindest einen Komparator handeln. Bevorzugt handelt es sich bei der Auswerteeinheit jedoch um einen Mikroprozessor. Dem Mikroprozessor ist eine Speicherein-heit zugeordnet, in der Kennlinien und/oder Daten abgespeichert sind, die den Verschmutzungsgrad am Deckel des Behälters bei den unterschiedlichen Materialien in Abhängigkeit zu den Stromwerten setzen, die zwischen einer der beiden Meßelektroden und der Überwachungselektrode gemessen werden.

Eine vorteilhafte Ausgestaltung der erfindungsgemäßen Vorrichtung sieht vor, daß die Auswerteeinheit ein Alarmsignal setzt, sobald der Verschmutzungs-grad am Deckel des Behälters einen vorgegebenen tolerierbaren Verschmutzungsgrad überschreitet. Sobald dieses Alarmsignal gesetzt wird, weiß das Bedienpersonal, daß eine Reinigung des Deckels umgehend oder in naher Zukunft erforderlich ist.

Gemäß einer besonders vorteilhaften Ausgestaltung der erfindungsgemäßen Vorrichtung kann die Kompensationselektrode so ausgebildet sein, daß sie als Sicherheitselektrode arbeitet, also auch Fehlermeldungen bzw. eine Sicherheitsabschaltung ermöglicht, wenn die konduktive Meßeinrichtung aufgrund von Fehlern in der Elektronik oder infolge von nicht leitfähigen Ablagerungen an den Meßelektroden versagt. Hierzu ist die Kompensations-elektrode so ausgebildet ist, daß sie eine Erhebung aufweist, die bei einem vorgegebenen zweiten Füllstand mit dem Probenmedium in Kontakt kommt; die Auswerteeinheit interpretiert nachfolgend eine Stromänderung, die sich in der Meßeinrichtung für den Störstrom zeigt, als eine Fehlfunktion der konduktiven Meßeinrichtung und veranlaßt die Ausgabe einer entsprechenden Fehlermeldung bzw. eine sofortige Sicherheitsabschaltung.

Die Erfindung wird anhand der nachfolgenden Zeichnungen näher erläutert. Es zeigt:
Fig. 1: einen Querschnitt gemäß der Kennzeichnung A-A in Fig. 2,
Fig. 2: eine Draufsicht auf eine bevorzugte Ausgestaltung der erfindungsgemäßen Vorrichtung,
Fig. 3: den in Fig. 1 dargestellten Querschnitt mit Ersatzwiderständen,
Fig. 4: ein Blockschaltbild einer bevorzugten Ausführungsform der erfindungsgemäßen Vorrichtung,
Fig. 5: eine graphische Darstellung des Meßstroms in Abhängigkeit von dem Verschmutzungsgrad bei einer ersten Leitfähigkeit des Probenmediums,
Fig. 6: eine graphische Darstellung des Meßstroms in Abhängigkeit von dem Verschmutzungsgrad bei einer zweiten Leitfähigkeit des Probenmediums,
Fig. 7: eine schematische Darstellung der Zunahme des Verschmutzungs-grades an einer Elektrode,
Fig. 8: eine Draufsicht auf eine bevorzugte Ausgestaltung der Kompensationselektrode und
Fig. 9: einen Längsschnitt gemäß der Kennzeichnung B-B in Fig. 8.

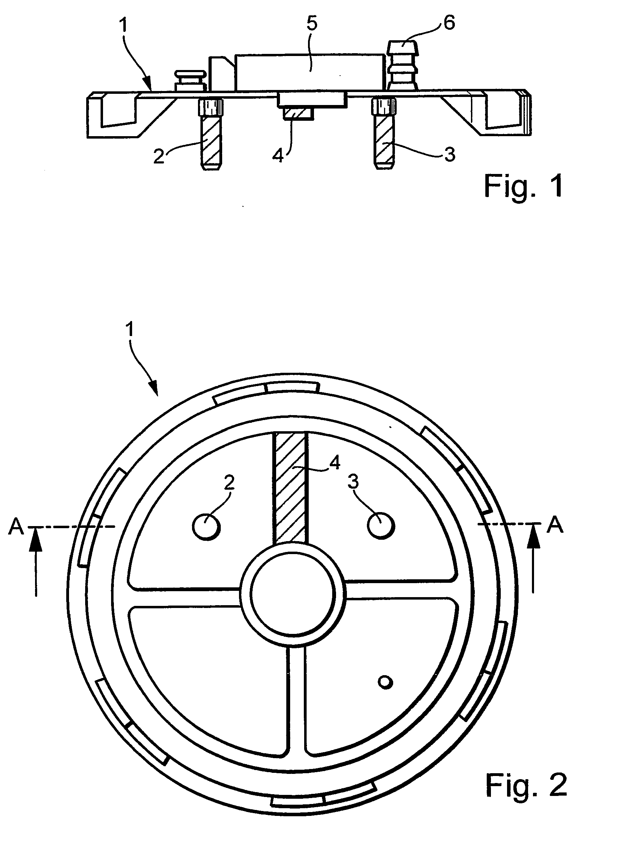

In Fig. 2 ist eine Draufsicht auf eine bevorzugte Ausgestaltung der erfindungsgemäßen Vorrichtung zu sehen. Fig. 1 zeigt einen Querschnitt gemäß der Kennzeichnung A-A in Fig. 2. Beispielhaft wird die erfindungsgemäße Lösung nachfolgend in Verbindung mit einer Dosiereinrichtung beschrieben, die z. B. in einem Probennehmer verwendet wird. Wie bereits zuvor gesagt, ist die erfindungsgemäße Vorrichtung jedoch keinesfalls auf diesen speziellen Anwendungsfalll beschränkt.

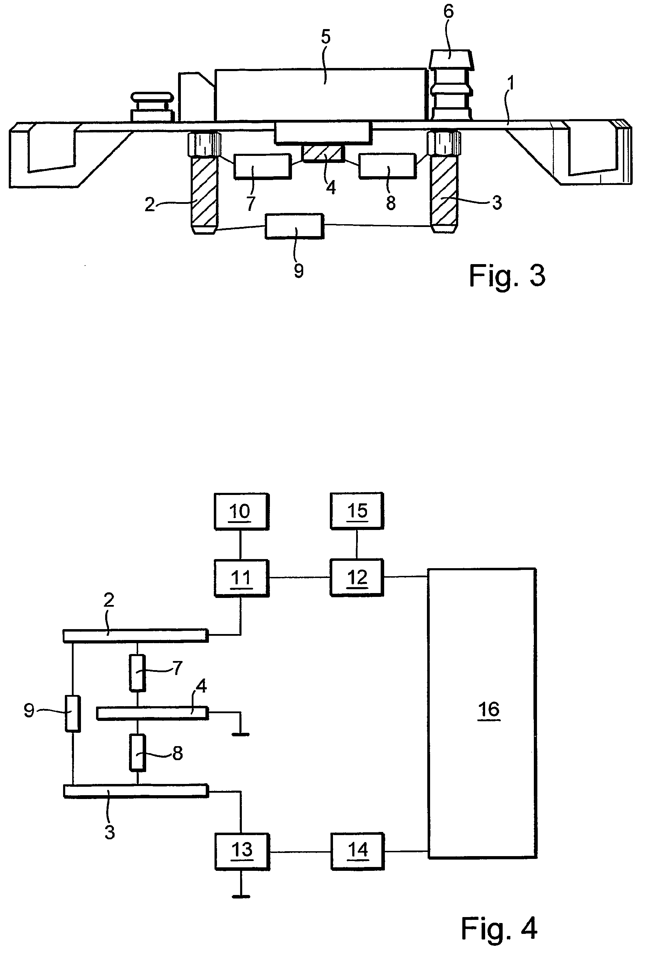

Zwei Meßelektroden 2, 3 sind am Deckel 1 des in den Figuren nicht gesondert dargestellten Behälters befestigt. Im Betriebsfall ragen die beiden zylind-rischen Meßelektroden 2, 3 bis zu einer durch ihre Ausmaße fest vorgege-benen Länge in den Dosierbehälter hinein. Sobald beide Meßelektroden 2, 3 am Ende des Ansaugvorgangs mit dem leitfähigen Probenmedium in Kontakt kommen, fließt zwischen den beiden Meßelektroden 2, 3 der Meßstrom I*_{M}*. der Meßstrom ist abhängig von der Leitfähigkeit bzw. dem Widerstand des Prozeßmediums. Der entsprechende Widerstand des Probenmediums ist übrigens in Fig. 3 ersatzweise durch den Widerstand 9 gekennzeichnet. Ein Signal, daß der vorgegebene Füllstand erreicht ist, wird an die Prozeßablauf-steuerung weitergeleitet.

Zwischen den beiden Meßelektroden 2, 3 ist die Kompensationselektrode 4 angeordnet. Die Kompensationselektrode 4 ist flächig, insbesondere plattenförmig ausgeführt und liegt an der Innenseite des Deckels 1 an. Da die Kompensationselektrode 4 nicht wie die Meßelektroden 2, 3 in den Behälter hineinragt, ist sichergestellt, daß sie bei Erreichen des maximalen Füllstands nicht in direkten Kontakt mit dem Probenmedium kommt.

Sobald sich an dem Deckel 1 des Behälters leitfähgie Ablagerungen bilden, fließt ein Störstrom I*_{S}* zwischen der Meßelektrode 2; 3 und der Kompensationselektrode 4. Die entsprechenden Ersatzwiderstände der leitfähigen, am Deckel 1 des Behälters abgelagerten Verschmutzungen sind in der Fig. 3 mit dem Widerstand 7 bzw. dem Widerstand 8 gekennzeichent.

Mit dem Bezugszeichen 5 ist übrigens in Fig. 2 die Ansaugleitung für das Probenmedium gekennzeichnet. Das Bezugszeichen 6 kennzeichnet den Anschlußstutzen für die Druckluftleitung.

In Fig. 4 ist ein Blockschaltbild einer bevorzugten Ausführungsform der erfindungsgemäßen Vorrichtung zu sehen.

Die Spannungsquelle 10 stellt eine strombegrenzte Wechselspannung zur Verfügung, die vorzugsweise kleiner ist als 24 V. Während die Strommeßeinrichtung 11 zur Bestimmung des Verschmutzunggrades des Deckels 1 des Behälters herangezogen wird, dient die Strommeßeinrichtung 13 zur Ermittlung des Erreichens des vorgegebenen Füllstands in dem Behälter.

Besteht weder eine elektrische Verbindung zwischen den beiden Meß-elektroden 2, 3 noch zwischen einer der beiden Meßelektroden 2; 3 und der Kompensationselektrode 4, so bedeutet dies, daß der vorgegebene Füllstand noch nicht erreicht ist und daß sich keine leitfähigen Ablagerungen im Bereich des Deckels 1 des Behälters befinden. Erfaßt die Strommeßeinrichtung 13 nachfolgend einen Meßstrom I*_{M}* und erkennt die Auswerteeinheit 14, daß der Wert des Stroms I*_{M}* über einem vorgegebenen Sollwert liegt, so wird ein entsprechendes Signal an die Prozeßablaufsteuerung 16 weitergeleitet. Diese leitet umgehend die notwendigen Schritte in die Wege. Im Falle der Füllstandserkennung in einem Dosierbehälter eines Probennehmers entspricht ein notwendiger Schritt dem sofortigen Stopp des Ansaugvorgangs.

Bei der Auswerteeinheit 14 handelt es sich im einfachsten Fall um einen Komparator. Selbstverständlich kann es sich bei der Auswerteeinheit 14 auch um einen Mikroprozessor handeln, der die gemessenen Stromwerte der Strommeßeinrichtung 13 nach einem vorgegebenen Soll-Istwert-Algorithmus auswertet.

Betrachten wir nun den Fall, daß sich leitfähige Ablagerungen am Deckel 1 des Behälters ausgebildet haben. Ohne die Kompensationselektrode 4 würde bei leerem Behälter über die Summe der Widerstände 7, 8 der Störstrom *I_{S}* durch die Strommeßeinrichtung 13 fließen. Da der Strom *I_{S}* üblicherweise wesentlich größer ist als der Strom *I_{M}* ist, der das Erreichen des vorgegebenen Füllstands kennzeichnet, signalisiert die Auswerteeinheit 14 fortwährend fehlerhaft, daß der vorgegebene Füllstand in dem Behälter erreicht ist. Damit ist die Dosiervorrichtung nicht mehr gebrauchsfähig.

Durch die zwischengeschaltete Kompensationselektrode 4 wird der Störstrom *I_{S}* nun nach Masse abgeleitet, d. h. der Störstrom *I_{S}* fließt nicht mehr über die Strommeßeinrichtung 13. Zwar wird ein Teil des Meßstroms *I_{M}* über den Widerstand 8 und die Kompensationselektrode 4 gegen Masse abgeleitet. Da jedoch der Innenwiderstand der Strommeßeinrichtung 13 sehr niederohmig gewählt ist, beeinflußt der Widerstand 8 erst bei extremer Niederohmigkeit die Leitfähigkeitsmessung, die der Erkennung des Füllstands des Probenmediums in dem Behälter dient. Extreme Niederohmigkeit tritt aber erst dann auf, wenn der Verschmutzungsgrad am Deckel 1 des Behälters ein sehr hohes Maß erreicht hat.

Erfindungsgemäß ist es daher möglich, selbst bei einer erheblichen Verschmutzung im Bereich des Deckels 1 des Behälters den Meßstrom *I_{M}* genau zu bestimmen und so die Leitfähigkeitsmessung ungestört durchzuführen. Wie bereits gesagt, werden durch die erfindungsgemäßen Lösungen die Wartungsarbeiten an der Dosiereinrichtung ganz erheblich reduziert, da die Ablagerungen im Bereich des Behälterdeckels in wesentlich größeren Zeitabständen entfernt werden können.

Gemäß einer vorteilhaften Weiterbildung der erfindungsgemäßen Vorrichtung kann darüber hinaus der Verschmutzungsgrad am Deckel 1 des Behälters beliebig genau bestimmt werden. Hierzu wird in der Strommeßeinrichtung 11 der Störstrom *I_{S}* gemessen. Der entsprechende Wert wird an die nachge-schaltete Auswerteeinheit 12 weitergeleitet. Im gezeigten Fall handelt es sich bei der Auswerteeinheit 12 um einen Mikroprozessor mit zugeordneter Speichereinheit 15. In der Speichereinheit 15 sind Funktionen bzw. Daten abgelegt, die den Verschmutzungsgrad des Deckels 1 des Behälters in Abhängigkeit von den Stromwerten bei Materialien mit unterschiedlicher Leitfähigkeit wiedergeben. Erhält die Auswerteeinheit 12 die Information über die Leitfähigkeit bzw. die Art der Ablagerungen, so läßt sich anhand der abgespeicherten Daten bzw. Kennlinien der Verschmutzungsgrad des Deckels 1 des Behälters hochgenau bestimmen.

Auch lassen sich in Verbindung mit einer vorteilhaften Weiterbildung der erfindungsgemäßen Vorrichtung verläßliche Aussagen darüber treffen, zu welchem Zeitpunkt die nächste Reinigung des Deckels 1 des Behälters voraussichtlich notwendig sein wird. Derartige Angaben sind im Zusammen-hang mit Predictive Maintenance von großer Bedeutung in allen Bereichen der Meßtechnik.

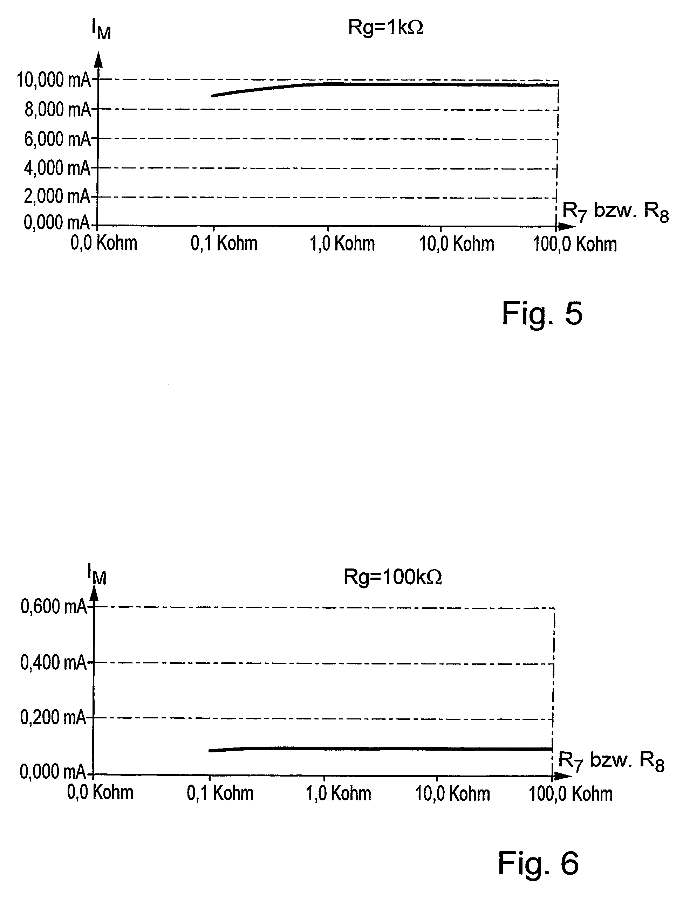

In Fig. 5 ist eine graphische Darstellung des Meßstroms *I_{M}* in Abhängigkeit von dem Verschmutzungsgrad bei einer ersten Leitfähigkeit des Proben-mediums zu sehen; Fig. 6 zeigt eine entsprechende graphische Darstellung des Meßstroms *I_{M}* in Abhängigkeit von dem Verschmutzungsgrad bei einer zweiten, wesentlich kleineren Leitfähigkeit des Probenmediums. In beiden Fällen wurde angenommen, daß der Innenwiderstand der Strommeßeinrichtung 11 und der Innenwiderstand der Strommeßeinrichtung 13 gleich sind. Konkret wurde ein Innenwiderstand von 10 Ohm angenommen. Anhand der Diagramme ist ersichtlich, daß selbst in dem Fall, daß der Widerstand 7 bzw. der Widerstand 8 aufgrund der Verschmutzung um einen Faktor 1000 kleiner ist als der Widerstand 9 des Probenmediums, dies kaum einen Einfluß auf den Meßstrom *I_{M}* hat.

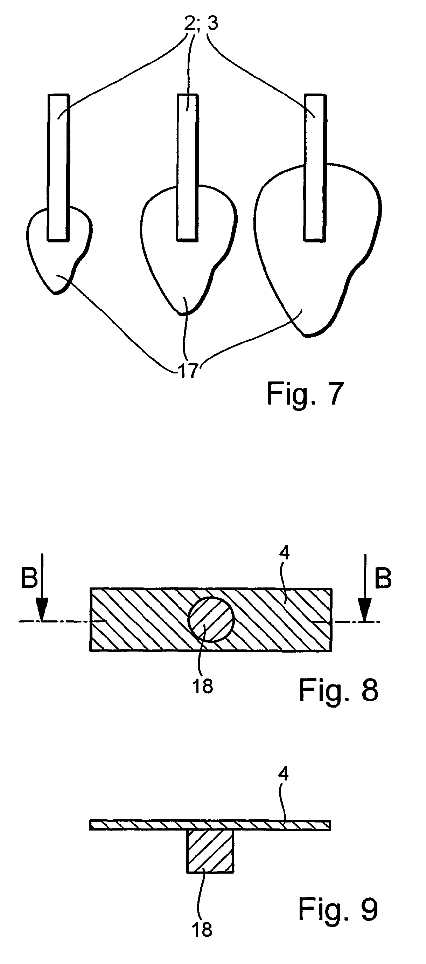

Fig. 7 zeigt eine schematische Darstellung der Zunahme des Verschmutzungsgrades an einer Meßelektrode 2, 3 und die Auswirkungen, die diese Verschmutzung auf die aus dem Stand der Technik bekannt gewordene konduktive Meßeinrichtung hat. Wie bereits an vorhergehender Stelle erwähnt, dienen die beiden langen Meßelektroden bei der bekannten Lösung der Erkennung des Erreichens des ersten vorgegebenen Füllstands, während die kürzere Sicherheitselektrode ggf. eine Sicherheitsabschaltung der Dosiervorrichtung bewirkt. Die Sicherheitselektrode dient einzig und allein einer Sicherheitsabschaltung bei einem Fehler in der Elektronik bzw. bei Schmutzanhaftungen aus nicht leitenden Materialien; tritt bei der bekannten Lösung infolge von leitfähigen Ablagerungen eine elektrische Verbindung zwischen den Meßelektroden 2, 3 auf, dann versagt die Dosiervorrichtung, da fortwährend das Erreichen des vorgegebenen Füllstands signalisiert wird.

Bei der linken Meßelektrode 2; 3, die in Fig. 7 zu sehen ist, sind die Ablagerungen noch gering, von links nach rechts nehmen sie jedoch stark zu. Daher rückt der leitfähige Teil der Meßelektrode 2; 3 immer weiter nach oben. Folglich steigt auch der Füllstand in z. B. einem Dosierbehälter immer weiter an, bis die aus dem Stand der Technik bekannte kurze Sicherheitselektrode mit dem Probenmedium in Berührung kommt und die bereits beschriebene Sicherheitsabschaltung bewirkt.

Gemäß einer vorteilhaften Ausgestaltung der erfindungsgemäßen Lösung übernimmt die Kompensationselektrode diese Sicherheitsabschaltung bei nicht leitenden Verschmutzungen zusätzlich: Erfolgt auch hier durch die langen Meßelektroden 2; 3 keine Abschaltung des Dosiervorgangs (z. B. aufgrund eines Elektronikfehlers oder aufgrund der Tatsache, daß die Meßelektroden durch nicht leitende Stoffe, z. B. Fett verschmutzt sind), dann taucht die kürzere Kompensationselektrode 4 in das Probenmedium ein, und es erfolgt auch hier eine Sicherheitsabschaltung mit Meldung. Ein Eindringen vom Probenmedium in die Pneumatiksteuerung und Vakuumpumpe wird damit effektiv verhindert.

Fig. 8 zeigt eine Draufsicht auf eine bevorzugte Ausgestaltung der Kompensationselektrode; in Fig. 9 ist ein Längsschnitt gemäß der Kennzeichnung B-B in Fig. 8 zu sehen.

Das Funktionsprinzip der bevorzugten Ausgestaltung der erfindungsgemäßen Lösung ist wie folgt: Baut sich an den langen Meßelektroden 2, 3 von unten her eine nicht leitende Verschmutzung auf, so übersteigt der Meßstrom I*_{M}* bei Erreichen des vorgegebenen Füllstands nicht den vorgegebenen Sollwert, obwohl die Meßelektroden 2, 3 bereits in das Probenmedium eintauchen. Der Behälter wird weiterhin befüllt, bis nachfolgend der zylinderförmige Teil (Erhebung 18) der Kompensationselektrode 4 mit dem Probenmedium in Berührung kommt. Dieser Kontakt bewirkt eine Stromänderung in der Strommeßeinrichtung 11. Diese Stromänderung z. B. während des Ansaug-vorgangs kann als Kriterium dafür herangezogen werden, daß die Kompensationselektrode 4 ins Probenmedium eintaucht und daß die beiden langen Meßelektroden folglich fehlerhaft arbeiten. Wiederum löst die Auswerteeinheit 14 bzw. die Ablaufsteuerung 16 eine Sicherheitsabschaltung mit Meldung aus.

## Patentansprüche

1. Vorrichtung zur Erkennung eines vorgegebenen Füllstands eines Mediums in einem Behälter mit Deckel (1) mittels einer konduktiven Meßeinrichung, die zumindest zwei in den Behälter hineinragende Meßelektroden (2, 3) aufweist, wobei ein zwischen den beiden Meßelektroden (2, 3) fließender Meßstrom (I*_{M}*) zur Erkennung des Erreichens des vorgegebenen Füllstands heran-gezogen wird,
**dadurch gekennzeichnet,**
**daß** eine Kompensationselektrode (4) vorgesehen ist, die so angeordnet und geschaltet ist, daß ein zwischen einer der Meßelektroden (2; 3) und der Kompensationselektrode fließender Störstrom (I*_{S}*), der aufgrund von leitfähigen Ablagerungen am Deckel (1) des Behälters ermöglicht wird, über die Kompensationselektrode abgeleitet wird.

2. Vorrichtung zur Erkennung eines vorgegebenen Füllstands eines Mediums in einem Behälter mit Deckel (1) mittels einer konduktiven Meßeinrichung, die zumindest zwei in den Behälter hineinragende Meßelektroden (2, 3) aufweist, wobei ein zwischen den beiden Meßelektroden (2, 3) fließender Meßstrom (I*_{M}*) zur Erkennung des Erreichens des vorgegebenen Füllstands heran-gezogen wird,
**dadurch gekennzeichnet,**
**daß** eine Kompensationselektrode (4) vorgesehen ist, die so angeordnet und/oder geschaltet ist, daß anhand eines zwischen einer der Meßelektroden (2; 3) und der Kompensationselektrode fließenden Störstroms (I*_{S}*), der aufgrund von leitfähigen Ablagerungen am Deckel (1) des Behälters ermöglicht wird, der Verschmutzungsgrad im Bereich des Deckels (1) des Behälters ermittelt wird.

3. Vorrichtung nach Anspruch 1 oder 2,
**dadurch gekennzeichnet,**
**daß** die beiden Meßelektroden (2, 3) am Deckel (1) des Behälters befestigt sind.

4. Vorrichtung nach Anspruch 3,
**dadurch gekennzeichnet,**
**daß** die beiden Meßelektroden (2, 3) zylinderförmig oder säulenförmig ausgebildet sind.

5. Vorrichtung nach Anspruch 1 oder 2,
**dadurch gekennzeichnet,**
**daß** die Kompensationselektrode (4) derart ausgebildet und angeordnet ist, daß sie bei Erreichen des vorgegebenen Füllstands nicht mit dem Medium in Kontakt kommt.

6. Vorrichtung nach Anspruch 5,
**dadurch gekennzeichnet,**
**daß** die Kompensationselektrode (4) plattenförmig ausgebildet und am Deckel (1) des Behälters angeordnet ist.

7. Vorrichtung nach Anspruch 1, 2 oder 3,
**dadurch gekennzeichnet,**
**daß** die Kompensationselektrode (4) symmetrisch zwischen den beiden Meßelektroden (2, 3) angeordnet ist.

8. Vorrichtung nach Anspruch 1, 2, 3 oder 4,
**dadurch gekennzeichnet,**
**daß** eine erste Strommeßvorrichtung (13) vorgesehen ist, die anhand des zwischen den beiden Meßelektroden (2, 3) fließenden Meßstroms (I*_{M}*) Information über das Erreichen des vorgegebenen Füllstands zur Verfügung stellt.

9. Vorrichtung nach Anspruch 8,
**dadurch gekennzeichnet,**
**daß** eine erste Auswerteeinheit (14) vorgesehen ist, die anhand des von der ersten Strommeßvorrichtung (13) erfaßten Meßstroms (I*_{M}*) erkennt und ggf. signaliseirt, wenn der vorgegebene Füllstand erreicht ist.

10. Vorrichtung nach Anspruch 1, 2, 5, 6 oder 7,
**dadurch gekennzeichnet,**
**daß** eine zweite Strommeßvorrichtung (11) vorgesehen ist, die anhand des zwischen einer der beiden Meßelektroden (2; 3) und der Kompensations-elektrode (4) fließenden Störstroms (I*_{S}*) Information über den Verschmutzungsgrad an dem Deckel (1) des Behälters zur Verfügung stellt.

11. Vorrichtung nach Anspruch 10,
**dadurch gekennzeichnet,**
**daß** eine zweite Auswerteeinheit (12) vorgesehen ist, die anhand des in der zweiten Strommeßvorrichtung (11) ermittelten Störstroms (I*_{S}*) erkennt und ggf. signalisiert, daß ein vorgegebenener Verschmutzungsgrad erreicht ist bzw. welcher Verschmutzungsgrad erreicht ist.

12. Vorrichtung nach Anspruch 11,
**dadurch gekennzeichnet,**
**daß** der zweiten Auswerteeinheit (12) eine Speichereinheit (15) zugeordnet ist, in der Kennlinien und/oder Daten abgespeichert sind, die den Verschmutzungsgrad am Deckel (1) des Behälters als Funktion des Störstroms (I*_{S}*) wiedergeben, der zwischen einer der beiden Meßelektroden (2; 3) und der Kompensationselektrode (4) fließt.

13. Vorrichtung nach Anspruch 11 oder 12,
**dadurch gekennzeichnet,**
**daß** die Auswerteeinheit (12) oder eine Ablaufsteuerung (16) ein Alarmsignal setzt, sobald der Verschmutzungsgrad am Deckel des Behälters einen vorgegebenen tolerierbaren Verschmutzungsgrad überschreitet.

14. Vorrichtung nach Anspruch 1 oder 2,
**dadurch gekennzeichnet,**
**daß** es sich bei dem Behälter um einen Dosierbehälter für einem Probennehmer handelt.

15. Vorrichtung nach einem oder mehreren der vorhergehenden Ansprüche,
**dadurch gekennzeichnet,**
**daß** die Kompensationselektrode so ausgebildet ist, daß sie eine Erhebung (18) aufweist, die bei einem vorgegebenen zweiten Füllstand mit dem Probenmedium in Kontakt kommt und
**daß** die Auswerteeinheit (14) im Falle eines nicht leitfähigen Probenmediums eine Stromänderung in der Meßeinrichtung (11) als eine Fehlfunktion der konduktiven Meßeinrichtung interpretiert.

## Claims

1. Unit to detect a predefined level of a medium in a container with a cover (1) with a conductive measuring unit which has at least two measuring electrodes (2, 3) that project into the container, where a measurement current (I*_{M}*) flowing between the two measuring electrodes (2, 3) is used to detect when the predefined level is reached,
**characterized in that**
a compensation electrode (4) is provided which is arranged and switched in such a way that an interference current (I*_{S}*) that flows between one of the measuring electrodes (2; 3) and the compensation electrode, and is made possible due to conductive deposits on the cover (1) of the container, is discharged via the compensation electrode.

2. Unit to detect a predefined level of a medium in a container with a cover (1) with a conductive measuring unit which has at least two measuring electrodes (2, 3) that project into the container, where a measurement current (I*_{M}*) flowing between the two measuring electrodes (2, 3) is used to detect when the predefined level is reached,
**characterized in that**
a compensation electrode (4) is provided which is arranged and/or switched in such a way that the degree of contamination around the cover (1) of the container is determined on the basis of an interference current (I*_{S}*) that flows between one of the measuring electrodes (2; 3) and the compensation electrode and is made possible due to conductive deposits on the cover (1) of the container.

3. Unit as per Claim 1 or 2,
**characterized in that**
the two measuring electrodes (2, 3) are secured to the cover (1) of the container.

4. Unit as per Claim 3,
**characterized in that**
the two measuring electrodes (2, 3) have a cylindrical or column-like shape.

5. Unit as per Claim 1 or 2,
**characterized in that**
the compensation electrode (4) is designed and arranged in such a way that it does not come into contact with the medium when the predefined level is reached.

6. Unit as per Claim 5,
**characterized in that**
the compensation electrode (4) has a plate-like design and is arranged on the cover (1) of the container.

7. Unit as per Claim 1, 2, or 3,
**characterized in that**
the compensation electrode (4) is arranged symmetrically between the two measuring electrodes (2, 3).

8. Unit as per Claim 1, 2, 3 or 4
**characterized in that**
a first current measuring unit (13) is provided which provides information on whether the predefined level has been reached on the basis of the measurement current (I*_{M}*) flowing between the two measuring electrodes (2, 3).

9. Unit as per Claim 8,
**characterized in that**
a first evaluation unit (14) is provided which uses the measuring current (I*_{M}*) measured by the first current measuring unit (13) to recognize and, where applicable, signal if the predefined level has been reached.

10. Unit as per Claim 1, 2, 5, 6, or 7
**characterized in that**
a second current measuring unit (11) is provided which uses the interference current (I*_{S}*) flowing between one of the two measuring electrodes (2; 3) and the compensation electrode (4) to provide information on the degree of contamination on the cover (1) of the container.

11. Unit as per Claim 10,
**characterized in that**
a second evaluation unit (12) is provided which uses the interference current (I*_{S}*) determined in the second current measuring unit (11) to recognize and, where applicable, signal that a predefined degree of contamination has been reached, or what degree of contamination has been reached.

12. Unit as per Claim 11,
**characterized in that**
a memory unit (15) is assigned to the second evaluation unit (12) in which characteristic curves and/or data are saved that return the degree of contamination on the cover (1) of the container as a function of the interference current (I*_{S}*) which flows between one of the two measuring electrodes (2; 3) and the compensation electrode (4).

13. Unit as per Claim 11 or 12,
**characterized in that**
the evaluation unit (12) or a sequence control system (16) issues an alarm signal as soon as the degree of contamination on the cover of the container exceeds a predefined tolerable degree of contamination.

14. Unit as per Claim 1 or 2,
**characterized in that**
the container is a dosing container for a sampler.

15. Unit as per one or more of the previous claims,
**characterized in that**
the compensation electrode is designed in such a way that it has a projected part (18) which comes into contact with the sample medium when a predefined second level is reached, and **in that** - in the case of a nonconductive sample medium - the evaluation unit (14) interprets a change of current in the measuring unit (11) as a malfunction of the conductive measuring unit.

## Revendications

1. Dispositif destiné à la détection d'un niveau prédéfini d'un produit au sein d'un réservoir avec un couvercle (1) au moyen d'un dispositif de mesure conductif, qui présente au moins deux électrodes de mesure (2, 3) plongeant dans le réservoir, un courant de mesure (I_{M}), utilisé pour détecter l'atteinte du niveau prédéfini, circulant entre les deux électrodes de mesure (2, 3),
**caractérisé en ce**
**qu'**est prévue une électrode de compensation (4), qui est disposée et commutée de telle manière qu'un courant parasite (I_{S}) rendu possible en raison de dépôts conducteurs sur le couvercle (1) du réservoir et circulant entre l'une des électrodes de mesure (2, 3) et l'électrode de compensation, est dérivé par l'intermédiaire de l'électrode de compensation.

2. Dispositif destiné à la détection d'un niveau prédéfini d'un produit au sein d'un réservoir avec un couvercle (1) au moyen d'un dispositif de mesure conductif, qui présente au moins deux électrodes de mesure (2, 3) plongeant dans le réservoir, un courant de mesure (I_{M}), utilisé pour détecter l'atteinte du niveau prédéfini, circulant entre les deux électrodes de mesure (2, 3),
**caractérisé en ce**
**qu'**est prévue une électrode de compensation (4), qui est disposée et/ou commutée de telle manière qu'au moyen d'un courant parasite (I_{S}) rendu possible en raison de dépôts conducteurs sur le couvercle (1) du réservoir et circulant entre l'une des électrodes de mesure (2, 3) et l'électrode de compensation, le degré d'encrassement est déterminé dans la zone du couvercle (1) du réservoir.

3. Dispositif selon la revendication 1 ou 2,
**caractérisé en ce**
**que** les deux électrodes de mesure (2, 3) sont fixées sur le couvercle (1) du réservoir.

4. Dispositif selon la revendication 3,
**caractérisé en ce**
**que** les deux électrodes de mesure (2,3) sont conçues en forme de cylindre ou en forme de colonne.

5. Dispositif selon la revendication 1 ou 2,
**caractérisé en ce**
**que** l'électrode de compensation (4) est conçue et disposée de telle manière qu'en cas d'atteinte du niveau prédéfini, elle n'est plus en contact avec le produit.

6. Dispositif selon la revendication 5,
**caractérisé en ce**
**que** l'électrode de compensation (4) est conçue en forme de plaque et disposée sur le couvercle (1) du réservoir.

7. Dispositif selon la revendication 1, 2 ou 3,
**caractérisé en ce**
**que** l'électrode de compensation (4) est disposée symétriquement entre les deux électrodes de mesure (2, 3).

8. Dispositif selon la revendication 1, 2, 3 ou 4,
**caractérisé en ce**
**qu'**est prévu un premier dispositif de mesure de courant (13) qui, au moyen du courant de mesure (I_{M}) circulant entre les deux électrodes de mesure (2, 3), met à disposition l'information concernant l'atteinte du niveau prédéfini.

9. Dispositif selon la revendication 8,
**caractérisé en ce**
**qu'**est prévue une première unité d'exploitation (14) qui, au moyen du courant de mesure (I_{M}) mesuré par le premier dispositif de mesure de courant (13), détecte et, le cas échéant, signale l'instant où le niveau prédéfini est atteint.

10. Dispositif selon la revendication 1, 2, 5, 6 ou 7,
**caractérisé en ce**
**qu'**est prévu un deuxième dispositif de courant de mesure (11) qui, au moyen du courant parasite (I_{S}) circulant entre l'une des deux électrodes de mesure (2, 3) et l'électrode de compensation (4), met à disposition l'information concernant le degré d'encrassement sur le couvercle (1) du réservoir.

11. Dispositif selon la revendication 10,
**caractérisé en ce**
**qu'**est prévue une deuxième unité d'exploitation (12) qui, au moyen du courant parasite (I_{S}) déterminé dans le deuxième dispositif de mesure de courant (11), détecte et, le cas échéant, signale qu'un degré d'encrassement prédéfini est atteint, ou quel degré d'encrassement est atteint.

12. Dispositif selon la revendication 11,
**caractérisé en ce**
**qu'**à la deuxième unité d'exploitation (12) est attribuée une unité de mémoire, dans laquelle sont mémorisées des lignes caractéristiques et/ou des données, qui reflètent le degré d'encrassement sur le couvercle (1) du réservoir en tant que fonction du courant parasite (I_{S}), qui circule entre l'une des deux électrodes de mesure (2, 3) et l'électrode de compensation.

13. Dispositif selon la revendication 11 ou 12,
**caractérisé en ce**
**que** l'unité d'exploitation (12) ou une commande séquentielle (16) active un signal d'alarme sitôt que le degré d'encrassement sur le couvercle du réservoir dépasse un degré d'encrassement tolérable prédéfini.

14. Dispositif selon la revendication 1 ou 2,
**caractérisé en ce**
**qu'**il s'agit, concernant le réservoir, d'un réservoir de dosage pour un préleveur d'échantillons.

15. Dispositif selon l'une ou plusieurs des revendications précédentes,
**caractérisé en ce**
**que** l'électrode de compensation est conçue de telle manière à présenter un bossage (18), qui entre en contact avec le produit d'échantillon en cas d'atteinte d'un deuxième niveau prédéfini et en ce
**que** l'unité d'exploitation (14) interprète, dans le cas d'un produit d'échantillon non conducteur, une variation de courant dans le dispositif de mesure (11) en tant que dysfonctionnement du dispositif de mesure conductif.
